# EUROPEAN PATENT APPLICATION

(11) **EP 3 524 400 A1**
(43) Date of publication of application: **14.08.2019**
(21) Application number: 18382079.4
(22) Date of filing: 13.02.2018
(51) Int. Cl.: B29C 33/38, G09B 23/28, B29C 33/00, B29C 33/44, B29C 39/10, B33Y 80/00, B29C 64/10

(54) **A METHOD OF MANUFACTURING A THREE-DIMENSIONAL MODEL AND A THREE-DIMENSIONAL MODEL OBTAINED THEREBY**

(71) Applicant: Universitat Politècnica De Catalunya, 08034 Barcelona (ES)
(72) Inventor: MUGURUZA BLANCO, Asier, 08690 Santa Coloma de Cervelló (ES); FENOLLOSA ARTÉS, Felip, 08013 Barcelona (ES)
(74) Representative: Juncosa Miró, Jaime

(57) **Abstract**

The invention relates to a method of manufacturing a three-dimensional model and a three-dimensional model obtained thereby. The method comprises 3D printing a three-dimensional mould (20) from data of a 3D digital file, the three-dimensional mould (20) including a thin-walled shell member (21) and an inner mould member (22) having one end (23) joined to the thin-walled shell member (21); applying an electro-functional coating (4) on selected surfaces (22a) of the inner mould member (22); connecting one or more electrical conductors (5a, 5b) to the electro-functional coating (4); pouring a curable opaque, transparent or translucent body model material (24) into the three-dimensional mould (20); curing the body model material (24); and removing the thin-walled shell member (21) by breaking it, severing a joint between the end (23) of the inner mould member and the thin-walled shell member (21) to let the inner mould member (22) and the electro-functional coating (4) remain embedded in the body model material (24) with terminals of the electrical conductors (5a, 5b) accessible.

## Description

### Technical field

The present invention relates to a method of manufacturing a three-dimensional model comprising 3D printing a mould comprising shell parts and inner parts, covering selected surface areas of the inner parts with an electro-functional coating, connecting one or more electrical conductors to the electro-functional coating, pouring an opaque, transparent or translucent body material within the mould, and breaking and removing the shell parts of the mould to obtain the three-dimensional model with terminals of the one or more electrical conductors accessible to be connected to an electric or electronic circuit.

The present invention also relates to a three-dimensional model comprising a three-dimensional body model made of a rigid or elastic, opaque, transparent or translucent body model material and a three-dimensional inner element model embedded into the body model, wherein the three-dimensional inner element model has selected surface areas thereof covered by an electro-functional with one or more electrical conductors connected thereto.

The invention is mainly, though not exclusively, useful in the field of three-dimensional models of anatomic organs for device development, surgical planning, medical training and educational functions.

Throughout this specification, the term "curable material" is used to mean a material that is initially provided in a flowable form and that is able to be then hardened by some additive or other agent or treatment into a rigid or elastic state.

### Background of the invention

In recent years, there have been an increasing number of papers on the use of three-dimensional models in the medical sector, fundamentally for preoperative planning and the dissemination of specific situations and cases for educational purposes. Simulation of medical procedures in this sense is becoming a more prominent part of the medical training.

Animal tissue has been used in the past for simulation, but often it presents significant differences from a human tissue with large amounts of variance between samples. It is also to be highlighted the difficulties in the obtaining and storage of animal tissue, as well as possible ethical issues regarding animal protection.

Fresh, frozen and fixed human cadaveric tissue, on the other hand, is also used for device development, medical training and educational functions, but the insufficient number of this human cadaveric tissue and their high cost makes them expensive and difficult to obtain. Furthermore, cadaveric human tissue also lacks the constitutive properties of the fresh or live human tissue. Neither cadaveric human tissues nor animal tissues meet the fidelity needs for enhanced training, and in some cases, their deficiencies can lead to negative training transfer.

In some cases such as complex oncological surgeries, the possibility of using 3D printed models for the study and analysis of the case where previous practices can be carried out determine the success of the surgery. In this sense, the geometrical limits of additive manufacturing in the different 3D printing technologies allow the reproduction of complex geometries capable of emulating in high fidelity the complicated and capricious forms of the anatomical elements, although the available materials limit their ability to reproduce them in soft materials, capable of simulating the different tissues or at least in the similarity that doctors and surgeons request.

Document CN105719550A discloses a tumour resection surgery training mould obtained by 3D printing from data of a 3D digital file. The mould has a surgical organ thin wall mould main body whose internal part is arranged with a tumour three-dimensional model. A connecting piece is arranged between the tumour three-dimensional model and the surgical organ thin wall mould main body. An internal part of the surgical organ thin wall mould main body is filled with transparent colloid. A pressure sensor is connected with a control device that controls open or close of a buzzer for generating buzzer prompt tone when an operation tool touches the tumour three-dimensional model.

Document US 2013/0085736 A1 discloses a medical simulator model where UV-sensitive coatings are applied to fluoresce in more than one colour when exposed to UV light, such as a first colour for a first pattern of UV-sensitive indicator coating, and a second colour for a second pattern of UV-sensitive indicator coating.

### Disclosure of the invention

The present invention contributes to overcome the aforementioned and other limitations by means of the use of 3D printing in the construction of a watertight mould for moulding an opaque, transparent or translucent model body, and the use of one or more functional paints having an electro-functional property to locally provide parts of the 3D printed mould which will remain embedded into the opaque, transparent or translucent model body with an electrical functionality, such as for example the ability to emit light or to act as a capacitive sensor.

Faced with the impossibility or high difficulty of direct extraction of the moulded anatomic model from a conventional mould, the three-dimensional impression allows the construction of flimsy moulds with thin-walled shell members and one or more inner mould members. So, the extraction of the moulded model is done thanks to the rupture and complete removal of the thin-walled shell members of the 3D printed mould while the one or more inner mould members of the 3D printed mould with the electro-functional coating applied thereon are left embedded into the opaque, transparent or translucent model body.

According to one aspect, the present invention provides a method of manufacturing a three-dimensional model comprising the step of printing by a 3D printing technique a three-dimensional mould of a body from data of a 3D digital file. The 3D digital file can be previously obtained, for example, by computed tomography (CT) scan, magnetic resonance imaging (MRI), optical scan, or by any other 3D digital imaging technique.

The three-dimensional mould is printed into one or more one-piece mould parts. When several mould parts are used, each one of the mould parts comprises a section of a thin-walled shell member internally reproducing an outer contour of the body, and at least one of the mould parts further comprises an inner mould member externally reproducing an outer contour of one or more inner elements of the body. When a single mould part is used, the mould part comprises both the thin-walled shell member and the inner mould member. In any case, the inner mould member has at least one end joined to the corresponding thin-walled shell member so that the inner mould member is supported on the thin-walled shell member.

The method further comprises the steps of applying an electro-functional coating on selected surface areas of the inner mould member, connecting one or more electrical conductors to the electro-functional coating, pouring a curable body model material within the three-dimensional mould, curing the body model material within the three-dimensional mould, and removing the thin-walled shell member by breaking it and severing a joint between the end of the inner mould member and the thin-walled shell member so that the inner mould member with the electro-functional coating applied thereto remains embedded into the body model material, with connection terminals of the one or more electrical conductors being accessible.

Then, the connection terminals of the electrical conductors can be connected to an electric power source or to an electric or electronic circuit. For example, the electro-functional coating can be a multi-layer electro-luminescent coating able to emit light when energized with electric power, or a capacitive sensor coating able to modify the operation of an electric or electronic circuit when activated by proximity or contact with an electro-conductive element such as a medical instrument or a finger.

The use of rigid mould materials obtained by the 3D printing technique in combination with rubbers, silicones, hydrogels, composites and resins poured by gravity and cured by catalytic additives, light radiation or other consolidation agents allow reproducing hard, rigid, soft and flexible elements having opaque, transparent, or translucent properties in combination with chromatic properties (different colours). Through painting techniques and with the use of electro-conductive paints and electro-luminescent paints, the obtained three-dimensional models are provided with the ability to emit light in a localized way or to emit a contact or proximity signal with respect to localized inner elements, thus increasing the interaction with the user, and increasing the added value of the reproduced model. By way of the method of the present invention, the three-dimensional model is provided with different sensory attributes such as mechanical, tactile, visual and auditory.

In one embodiment where a multi-layer electro-luminescent coating is used, the step of applying the electro-functional coating comprises applying four successive layers: an opaque or transparent electro-conductive first layer, a dielectric second layer, an electro-luminescent phosphor third layer, and a transparent electro-conductive fourth layer. In this case, one of the electrical conductors is connected to the opaque or transparent electro-conductive first layer and another of the electrical conductors is connected to the transparent electro-conductive fourth layer. Optionally, an encapsulating layer comprising for example an epoxy resin is additionally applied on the multi-layer electro-luminescent coating.

In another embodiment where a capacitive sensor coating is used, the step of applying the electro-functional coating comprises applying a single opaque, transparent or translucent sensor electro-conductive layer and optionally an opaque, transparent or translucent encapsulating layer on the single sensor electro-conductive layer. In this case, a single electrical conductor is connected to the single sensor electro-conductive layer. The encapsulating layer is preferably isolating and can comprise for example an epoxy resin.

Further embodiments of the method are envisaged involving application of both the multi-layer electro-luminescent coating and the capacitive sensor coating.

Preferably, the method further comprises the step of conditioning an inner surface of the single mould part or of the several mould parts of the three-dimensional mould to reduce its surface roughness before pouring the body model material. For example, the step of conditioning comprises sanding and polishing the inner surface of the thin-walled shell member and applying a finishing resin layer thereto and to the inner mould member. The finishing resin layer can comprise, for example, an epoxy resin.

This finishing resin layer allows using finer thicknesses in the thin-walled shell member of the one-piece mould parts as well as to provide a smoother surface to the cured body model material allowing achieving a greater degree of transparency favouring the visualization of the elements that this holds inside when a transparent or translucent body model material is used.

In the event that the three-dimensional mould is printed in a single mould part, it must have an upper opening wide enough to allow the operations of conditioning the inner surface of the three-dimensional mould and manually applying the multi-layer electro-functional coating through this upper opening.

The 3D printing technologies that can be used in the step of printing the three-dimensional mould from data of a 3D digital file include those where the deposition of material is done by point, as well as by energy (FDM (Fused Deposition Modelling), FFF (Fused Filament Fabrication)), those where the provision of material is made per line and where the energy is applied per layer (Polyjet), those where the provision of material is made by layer (bed) and where the energy is applied by point (SLA (Stereolithography), SLS (Selective Laser Sintering)) or by line (3DP (3D Printing), Multi Jet Fusion) or by layer (MIP-SL (Mask Image Projection-based Stereolithography), DLP (Digital Light Projector)).

The rest of operations in the manufacture of the three-dimensional mould other than printing by a 3D printing technique can be performed manually. For example, in one embodiment the step of conditioning the inner surface of the three-dimensional mould includes manual sanding and polishing and manually applying the finishing resin layer. The successive layers of the multi-layer electro-luminescent coating can be applied for example by manual painting by brush, or by atomized paint deposition through a HVLP (High Volume Low Pressure) gun, or by means of spray cans.

According to a second aspect, the present invention provides a three-dimensional model comprising a three-dimensional body model made of an opaque, transparent or translucent body model material, and a three-dimensional inner element model embedded into the body model, wherein the inner element model has at least one end not covered by the body model material. The three-dimensional model further comprises an electro-functional coating arranged on selected surface areas of the inner element model and in contact with the body model material, and one or more electrical conductors connected to the electro-functional coating. The one or more electrical conductors have accessible free connection terminals that can be connected to an electric power source or to an electric or electronic circuit.

This three-dimensional model can be obtained by the method according to the first aspect of the present invention.

In one embodiment, the body model material is transparent or translucent and the electro functional coating is a multi-layer electro-luminescent coating comprising four layers, namely an opaque or transparent electro-conductive first layer, a dielectric second layer, an electro-luminescent phosphor third layer, and a transparent electro-conductive fourth layer. One of the electrical conductors is connected to the opaque or transparent electro-conductive first layer and another of the electrical conductors is connected to the transparent electro-conductive fourth layer. Optionally, an encapsulating layer is provided on the multi-layer electro-luminescent coating. The encapsulating layer is preferably isolating and comprises, for example, an epoxy resin.

In another embodiment, the electro functional coating is a capacitive sensor coating comprising a single opaque, transparent or translucent sensor electro-conductive layer optionally covered by an opaque, transparent or translucent encapsulating layer, with a single electrical conductor connected to the single sensor electro-conductive layer. The encapsulating layer is preferably isolating and can comprise for example an epoxy resin.

In still another embodiment, the electro functional coating comprises both the multi-layer electro-luminescent coating and the capacitive sensor coating.

### Brief description of the drawings

The above and other features and advantages will be more apparent from the following detailed description of exemplary and non-limiting embodiments with reference to the accompanying drawings, in which:
Fig. 1 is a diagrammatic front view of a three-dimensional mould being printed by a 3D printing technique according to the method of the present invention;
Fig. 2 is a diagrammatic cross-sectional view of the three-dimensional mould printed into two separable mould parts;
Fig. 3 is a diagrammatic cross-sectional view illustrating the method step of applying an electro-functional coating consisting of a multi-layer electro-luminescent coating on selected surface areas of the mould and connecting electrical conductors to the multi-layer electro-luminescent coating;
Fig. 4 is a diagrammatic cross-sectional view illustrating the method step of pouring a curable body model material within the closed three-dimensional mould;
Fig. 5 is a diagrammatic view illustrating the method step of breaking and removing a thin-walled shell member of the three-dimensional mould once the body model material is set to obtain a three-dimensional model;
Fig. 6 is a diagrammatic cross-sectional view of the obtained three-dimensional model with the electrical conductors being connected to an electric power source to energize the multi-layer electro-luminescent coating;
Fig. 7 is a diagrammatic cross-sectional view illustrating successive layers of the multi-layer electro-luminescent coating and the electrical conductors connected to selected layers thereof and to an electric power source;
Fig. 8 is a diagrammatic cross-sectional view illustrating another embodiment of the electro-functional coating comprising a capacitive sensor coating with an electrical conductor connected thereto and to an electronic circuit; and
Fig. 9 is a diagrammatic cross-sectional view illustrating still another embodiment of the electro-functional coating comprising the capacitive sensor coating of Fig. 8 applied on top of the multi-layer electro-luminescent coating of Fig. 7 with respective electrical conductors connected to independent electronic circuits;
Fig. 10 is a diagrammatic cross-sectional view illustrating the electro-functional coating of Fig. 9 with the electrical conductors connected to a common electronic circuit.

### Detailed description of exemplary embodiments

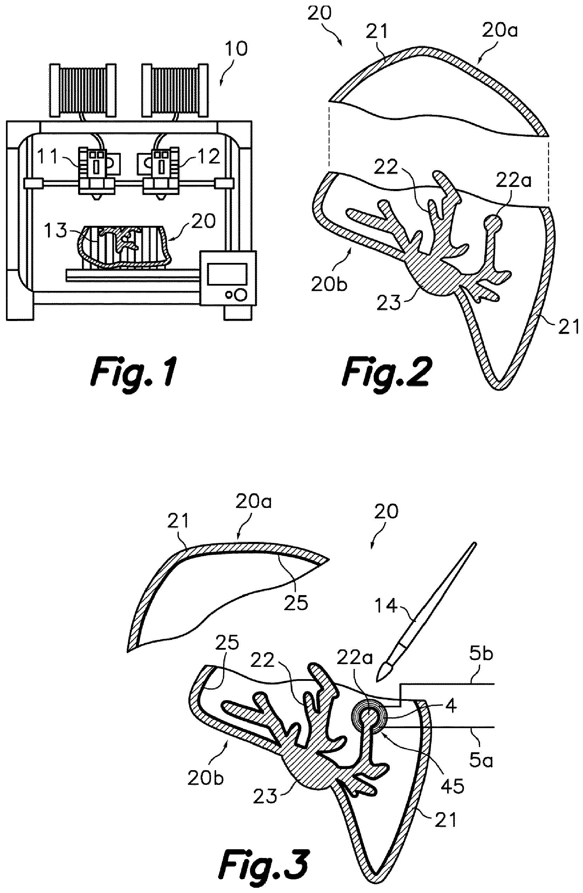

A method of manufacturing a three-dimensional model 30 according to a first aspect of the present inventions is described below with reference to Figs. 1 to 5.

Fig. 1 shows a 3D printer 10 implementing a 3D printing technique to print a three-dimensional mould 20 of a body from data of a 3D digital file. The 3D printing technique implemented by the 3D printer 10 shown in Fig. 1 is fused deposition modelling (FDM or fused filament fabrication (FFF), although other 3D printing techniques can be used in the method of the present invention. The 3D digital file can be obtained, for example, by computed tomography CT scan, magnetic resonance imaging MRI, or optical scan.

The 3D printer 10 shown in Fig. 1 is provided with two extrusion heads 11, 12. For example, one of the extrusion heads 11, 12 can be used to print the three-dimensional mould 20 and the other extrusion head can be used to print sacrificial internal and external printed supports 13.

As shown in Fig. 2, the three-dimensional mould 20 is printed into two separable mould parts 20a, 20b. Each one of the mould parts 20a, 20b is a one-piece part and comprises a section of a thin-walled shell member 21. One of the mould parts 20b further comprises an inner mould member 22 which has one end 23 joined to the corresponding thin-walled shell member 21 so that the inner mould member 22 is supported on the thin-walled shell member 21.

After extraction of the printed mould parts 20a, 20b from the 3D printer 10, the sacrificial internal and external printed supports 13 which have been used for supporting the cantilever geometries of the mould parts 20a, 20b in the 3D printer 10 are eliminated. In the event that, as usual, said sacrificial printed supports 13 are made of materials soluble in water or another liquid, the elimination thereof is carried out by submerging all or part of the printed element in water or in the other liquid.

When the mould parts 20a, 20b are joined together to form the three-dimensional mould 20, the thin-walled shell members 21 internally reproduce an outer contour of a body, such as an anatomic organ, and the inner mould member 22 externally reproduces an outer contour of one or more inner elements, such as bones, tendons, nerves and vessels located inside the anatomic organ. In the example shown in the Figures, the inner mould member 22 further reproduces an inner element to be highlighted 22a, such as for example a tumour.

Then, the method comprises conditioning an inner surface of the three-dimensional mould 20, for example by manually sanding and polishing the inner surface of the thin-walled shell members 21 of the mould parts 20a, 20b and applying a finishing resin layer 25 on the polished inner surface of the thin-walled shell members 21 and on the inner mould member 22. The finishing resin layer 25 comprises for example an epoxy resin.

As shown in Fig. 3, an electro-functional coating 45 consisting in this case of a multi-layer electro-luminescent coating 4 is then manually applied, for example by means of a brush 14, on selected surface areas of the inner mould member 22, and specifically on the surface of the inner element to be highlighted 22a. Electrical conductors 5a, 5b, such as for example connection wires, are connected to selected layers of the multi-layer electro-luminescent coating 4. The electrical conductors 5a, 5b have connection terminals outside the three-dimensional mould 20.

In some cases, and depending on the shape of the body to be reproduced, the three-dimensional mould 20 could be printed in a single mould part having an upper opening wide enough to allow the operations of conditioning the inner surface thereof and manually applying the multi-layer electro-functional coating 45 through the upper opening.

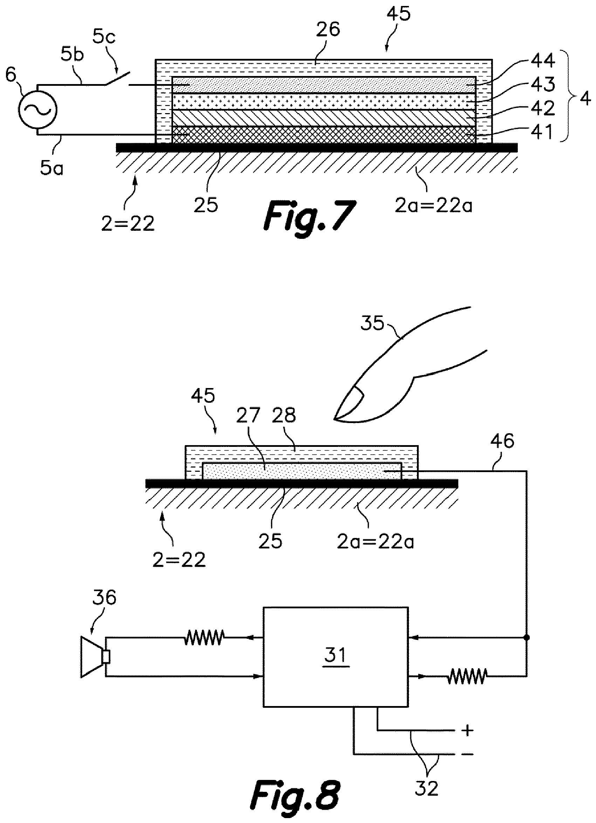

Fig. 7 shows in detail the composition of the multi-layer electro-luminescent coating 4. The multi-layer electro-luminescent coating 4 comprises an opaque or transparent electro-conductive first layer 41 applied onto the surface of the inner element to be highlighted 22a of the inner mould member 22, a dielectric second layer 42 applied onto the electro-conductive first layer 41, an electro-luminescent phosphor third layer 43 applied onto the dielectric second layer 42, and a transparent electro-conductive fourth layer 44 applied onto the electro-luminescent phosphor third layer 43.

One of the connection wires 5a is connected to the electro-conductive first layer 41 and another one of the connection wires 5b is connected to the transparent electro-conductive fourth layer 44. Optionally, an encapsulating layer 26 comprising for example an epoxy resin is applied on the multi-layer electro-luminescent coating 4.

According to the method of the present invention, the electro-conductive first layer 41, the dielectric second layer 42, the electro-luminescent phosphor third layer 43, the transparent electro-conductive fourth layer 44 and the encapsulating layer 26 are manually applied onto selected surfaces of the inner mould member 22.

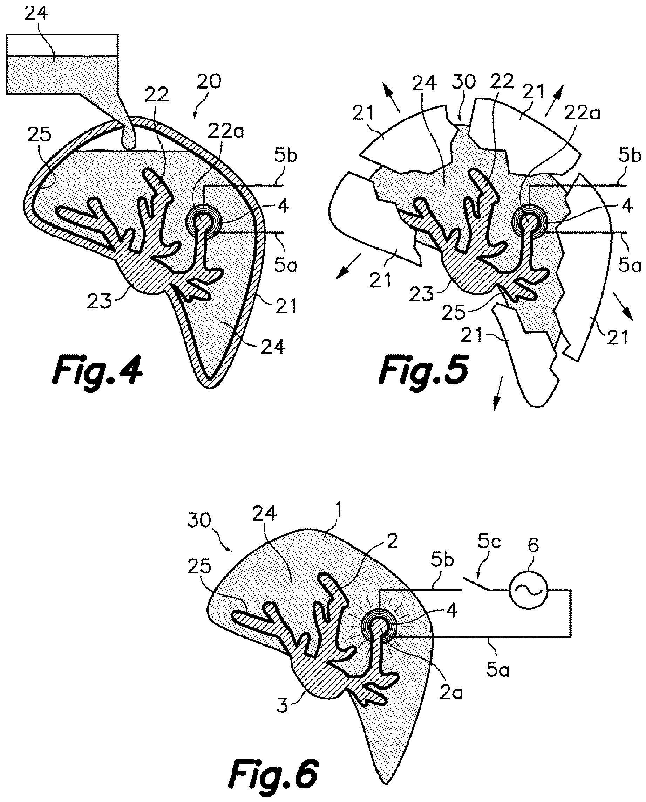

As shown in Fig. 4, once the inner surface of the mould parts 20a, 20b have been conditioned and the multi-layer electro-luminescent coating 4 has been applied, the two mould parts 20a, 20b are joined together to form the three-dimensional mould 20 and a curable transparent or translucent body model material 24 is poured within the three-dimensional mould 20 through an upper opening thereof. The body model material 24 is then cured within the three-dimensional mould 20.

The body model material 24 comprises for example a coloured, opaque, transparent or translucent silicone, rubber, hydrogel, composite, or resin and is curable for example by catalytic additives, by light radiation or by other consolidation agents.

As represented in Fig. 5, once the body model material 24 is set, a three-dimensional model 30 (individually shown in Fig. 6) is obtained by breaking and removing the thin-walled shell members 21 of the mould parts 20a, 20b of the three-dimensional mould 20, including severing a joint between the end 23 of the inner mould member 22 and the corresponding thin-walled shell member 21, thereby the inner mould member 22 remains embedded into the body model material 24. The connection terminals of the electrical conductors 5a, 5b are let accessible outside the three-dimensional model 30.

Fig. 6 shows a three-dimensional model 30 according to a second aspect of the present invention, which is obtained by the method according to the first aspect of the present invention.

The three-dimensional model 30 comprises a three-dimensional body model 1 made of a body model material 24, and a three-dimensional inner element model 2 embedded into the three-dimensional body model 1, wherein the three-dimensional inner element model 2 is formed by the inner mould member 22 which remains embedded into the body model material 24 after removing the mould thin-walled shell member 21.

The inner element model 2 has one end 3 not covered by the body model material 24. An electro-functional coating 45 is arranged on selected surface areas of the inner element model 2 and in contact with the body model material 24, and electrical conductors are connected to the electro-functional coating 45. The selected surface areas of the inner element model 2 on which the electro-functional coating 45 is arranged correspond to an inner element to be highlighted 2a.

In the embodiment shown in Fig. 6, the electro-functional coating 45 comprises a multi-layer electro-luminescent coating 4 as shown in Fig. 7 and the electric conductors comprise electrical conductors 5a, 5b connected to selected layers of the multi-layer electro-luminescent coating 4.

More particularly, as previously explained with relation to Fig. 7, the multi-layer electro-luminescent coating 4 comprises an opaque or transparent electro-conductive first layer 41, a dielectric second layer 42, an electro-luminescent phosphor third layer 43, and a transparent electro-conductive fourth layer 44. One of the connection wires 5a is connected to the opaque or transparent electro-conductive first layer 41 and another of the connection wires 5b is connected to the transparent electro-conductive fourth layer 44. The electrical conductors 5a, 5b have free connection terminals accessible outside the three-dimensional model 30.

An encapsulating layer 26 is applied on the multi-layer electro-luminescent coating 4 although this is not essential for the light emitting function, but it could be necessary for protecting the terminals from a possible short circuit. The encapsulating layer 26 is transparent or translucent and comprises, for example, an epoxy resin.

In use, the connection terminals of the electrical conductors 5a, 5b can be connected to an AC power source 6 and one of the connection wires can include a circuit switch 5c. When the multi-layer electro-luminescent coating 4 is energized the multi-layer electro-luminescent coating 4 emits light and the inner element to be highlighted 2a is lit. The inner element model 2 can have more than one inner element to be highlighted, and each inner element to be highlighted can be covered with one particular multi-layer electro-luminescent coating connected to the electric power source by respective connection wires including circuit switches 5c, thereby the different inner elements to be highlighted can be selectively lit acting on the circuit switches 5c.

According to one possible medical application of the three-dimensional model 30, the three-dimensional body model 1 reproduces an anatomic organ, such as a liver, and the inner element model 2 reproduces one or more inner elements of the anatomic organ, such tendons, nerves and vessels, and the inner element to be highlighted 2a reproduces, for example, a tumour. Thus the three-dimensional model 30 is useful for device development, surgical planning, medical training and educational functions.

Fig. 8 shows an alternative embodiment of the electro-functional coating 45 which comprises a capacitive sensor coating applied on the surface of the inner element to be highlighted 2a of the inner element model 2. The electro-functional coating 45 comprises a single opaque, transparent or translucent sensor electro-conductive layer 27 and preferably an encapsulating layer 28 applied on the sensor electro-conductive layer 27. An electrical conductor materialized by a single electrical conductor 5a is connected to the sensor electro-conductive layer 27 and to an electronic circuit including a microprocessor 31 and a sound emitter 36 such as for example a speaker, a horn, or a buzzer. The microprocessor 31 is connected to a DC power source 32, such as a battery.

The sensor electro-conductive layer 27 of the capacitive sensor coating acts as a condenser the capacitance of which changes by the proximity or contact with an electro-conductive body, such as for example a medical instrument or a finger 35. When the condenser is charged or discharged, the magnitude of the inlet signal received by the microprocessor 31 from the sensor electro-conductive layer 27 increases and the microprocessor 31, upon detecting the increased signal, activates the sound emitter 36 to emit a sound warning or message.

According to the method of the present invention, the sensor electro-conductive layer 27 and the encapsulating layer 28 are manually applied onto selected surfaces of the inner mould member 22.

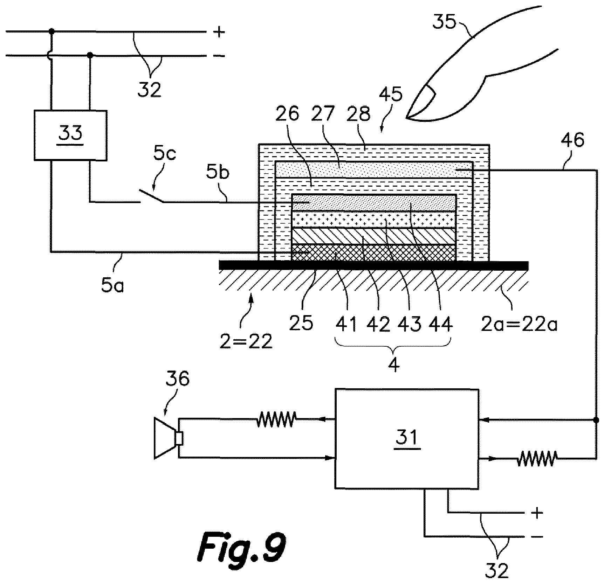

Fig. 9 shows another alternative embodiment of the electro-functional coating 45, which in this case comprises a capacitive sensor coating as the one described with relation to Fig. 8 having a sensor electro-conductive layer 27 arranged on top of a first encapsulating layer 26 arranged on a multi-layer electro-luminescent coating 4 as the one described with relation to Fig. 7. A second encapsulating layer 28 is arranged on the sensor electro-conductive layer 27 of the capacitive sensor coating.

Electrical conductors, such as electrical conductors 5a, 5b connect the multi-layer electro-luminescent coating 4 to the DC power source 32 via a DC/AC converter 33. One of the electrical conductors 5a, 5b includes a circuit switch 5c. A single electrical conductor 46, such as a connection wire, connects the sensor electro-conductive layer 27 of the capacitive sensor coating to an electronic circuit including a microprocessor 31 and a sound emitter 36 such as for example a speaker, a horn, or a buzzer. The microprocessor 31 is connected to a DC power source 32. The multi-layer electro-luminescent coating 4 is independently controlled by the circuit switch 5c and the sound emitter 36 is controlled by the capacitive sensor coating and the microprocessor 31.

According to the method of the present invention, the electro-conductive first layer 41, the dielectric second layer 42, the electro-luminescent phosphor third layer 43, the transparent electro-conductive fourth layer 44, the first encapsulating layer 26, the sensor electro-conductive layer 27 and the second encapsulating layer 28 are manually applied onto selected surfaces of the inner mould member 22.

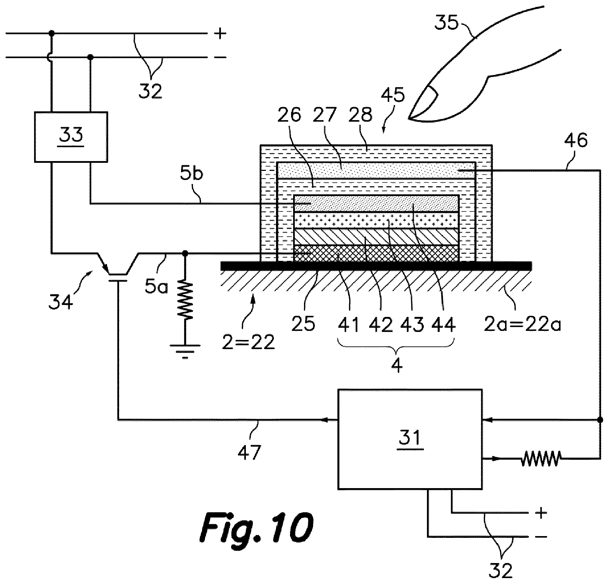

Fig. 10 shows the same electro-functional coating 45 as in Fig. 9 but with the respective electrical conductors connected to a common electronic circuit including a microprocessor 31 and a transistor 34. The sensor electro-conductive layer 27 of the capacitive sensor coating is connected to the microprocessor 31 by a single electrical conductor 46. The electro-conductive first and fourth layers 41, 44 of the multi-layer electro-luminescent coating 4 are connected to a DC power source 32 via a DC/AC converter 33 by electrical conductors 5a, 5b. The microprocessor 31 is fed by the DC power source 32.

One of the connection wires 5a connecting the multi-layer electro-luminescent coating 4 to the DC/AC converter 33 is divided and connected to the collector and emitter terminals of the transistor 34, and an output line 47 of the microprocessor 31 is connected to the base terminal of the transistor 34.

When the capacitance of the sensor electro-conductive layer 27 of the capacitive sensor coating acting as a condenser is modified by the proximity or contact with an electro-conductive element, the microprocessor 31 detects a variation in the inlet signal received by from the sensor electro-conductive layer 27, the microprocessor 31 sends a signal to the transistor 34 and the transistor 34 closes the circuit feeding the multi-layer electro-luminescent coating 4 thereby the multi-layer electro-luminescent coating 4 is energized and emits light. Thus, the multi-layer electro-luminescent coating 4 is controlled by the capacitive sensor coating and the microprocessor 31.

In the embodiment of the electro-functional coating 45 shown in Figs. 8, the sensor electro-conductive layer 27 of the capacitive sensor and the encapsulating layer 28 applied thereon may be opaque, transparent or translucent because no light effects are produced.

In the embodiments of the electro-functional coating 45 shown in Figs. 9 and 10, the sensor electro-conductive layer 27 of the capacitive sensor and the encapsulating layer 28 applied thereon are transparent or translucent in order to let the light emitted by the multi-layer electro-luminescent coating 4 to be visible therethrough.

The electronic circuits described above with relation to Figs. 9 and 10 can be combined so that the multi-layer electro-luminescent coating 4 and the sound emitter 36 are simultaneously controlled by the capacitive sensor coating and the microprocessor 31.

Many other electric or electronic circuits will readily occur to a skilled person. The electric and electronic circuits shown and described in relation with Figs. 7 to 10 are merely examples of application of the three-dimensional model 30 and do not make part of the present invention.

Apart from the applications described above, the possibility of reproducing a rigid customizable contour or element covered both externally and internally with a flexible surface or geometry and in which electro-luminescent lamps and/or capacitor sensor coatings are embedded has many other applications such as prosthesis or orthoses. However, the application of the three-dimensional model 30 is not only focused on the reproduction of three-dimensional anatomical organs but in all those cases where it is requested a three-dimensional model including the aforementioned attributes.

The scope of the present invention is defined by the attached claims.

## Claims

1. A method of manufacturing a three-dimensional model comprising the steps of:
printing by a 3D printing technique a three-dimensional mould (20) of a body from data of a 3D digital file, the three-dimensional mould (20) including a thin-walled shell member (21) internally reproducing an outer contour of the body and an inner mould member (22) externally reproducing an outer contour of one or more inner elements of the body, the inner mould member (22) being supported on the thin-walled shell member (21);
pouring a curable body model material (24) within the three-dimensional mould (20);
curing the body model material (24) within the three-dimensional mould (20); and
removing the thin-walled shell member (21) of the three-dimensional mould (20) to obtain a three-dimensional model (30);
**characterized by** further comprising the steps of:
printing the three-dimensional mould (20) into at least one mould part comprising the thin-walled shell member (21) and the inner mould member (22), the inner mould member (22) having at least one end (23) joined to the thin-walled shell member (21);
applying an electro-functional coating (45) on selected surfaces of the inner mould member (22) before pouring the body model material (24);
connecting at least one electrical conductor (5a, 5b, 46) to the electro-functional coating (45) before pouring the body model material (24); and
once the body model material (24) is poured and cured within the three-dimensional mould (20), removing the thin-walled shell member (21) by breaking it, and severing a joint between the at least one end (23) of the inner mould member (22) and the thin-walled shell member (21) to let the inner mould member (22) and the electro-functional coating embedded into the body model material (24) with a terminal of the at least one electrical conductor (5a, 5b, 46) being accessible.

2. The method of manufacturing a three-dimensional model according to claim 1, wherein the step of applying the electro-functional coating (45) comprises applying an electro-conductive first layer (41), a dielectric second layer (42), an electro-luminescent phosphor third layer (43), and a transparent electro-conductive fourth layer (44) to form a multi-layer electro-luminescent coating (4).

3. The method of manufacturing a three-dimensional model according to claim 2, wherein the step of connecting the at least one electrical conductor (5a, 5b, 46) comprises connecting an electrical conductor (5a) to the electro-conductive first layer (41) and another electrical conductor (5b) to the transparent electro-conductive fourth layer (44).

4. The method of manufacturing a three-dimensional model according to claim 2 or 3, further comprising applying an encapsulating layer (26) on the multi-layer electro-luminescent coating (4) or applying an encapsulating layer (26) comprising an epoxy resin on the multi-layer electro-luminescent coating (4).

5. The method of manufacturing a three-dimensional model according to claim 1, wherein the step of applying the electro-functional coating (45) comprises applying a sensor electro-conductive layer (27) to form a capacitive sensor coating.

6. The method of manufacturing a three-dimensional model according to claim 5, wherein the step of connecting the at least one electrical conductor (5a, 5b, 46) comprises connecting an electrical conductor (46) to the sensor electro-conductive layer (27).

7. The method of manufacturing a three-dimensional model according to claim 5 or 6, further comprising applying an encapsulating layer (28) on the sensor electro-conductive layer (27) of the capacitive sensor coating or applying an encapsulating layer (28) comprising an epoxy resin on the sensor electro-conductive layer (27) of the capacitive sensor coating.

8. The method of manufacturing a three-dimensional model according to claim 1, wherein the step of applying the electro-functional coating (45) comprises applying an electro-conductive first layer (41), a dielectric second layer (42), an electro-luminescent phosphor third layer (43), and a transparent electro-conductive fourth layer (44) to form a multi-layer electro-luminescent coating (4), a transparent first encapsulating layer (26) or a transparent first encapsulating layer (26) comprising an epoxy resin on the multi-layer electro-luminescent coating (4), a sensor electro-conductive layer (27) on the transparent first encapsulating layer (26) of the multi-layer electro-luminescent coating (4) to form a capacitive sensor coating, and a transparent second encapsulating layer (28) or a transparent second encapsulating layer (28) comprising an epoxy resin on the capacitive sensor coating.

9. The method of manufacturing a three-dimensional model according to claim 8, wherein the step of connecting the at least one electrical conductor (5a, 5b, 46) comprises connecting an electrical conductor (5a) to the electro-conductive first layer (41), another electrical conductor (5b) to the transparent electro-conductive fourth layer (44) and still another electrical conductor (46) to the sensor electro-conductive layer (27).

10. The method of manufacturing a three-dimensional model according to claim 1, further comprising the step of conditioning an inner surface of the three-dimensional mould (20) before pouring the body model material (24) comprising sanding and polishing an inner surface of the thin-walled shell member (21), or sanding and polishing an inner surface of the thin-walled shell member (21) and applying a finishing resin layer (25), or sanding and polishing an inner surface of the thin-walled shell member (21) and applying a finishing resin layer (25) comprising an epoxy resin.

11. A three-dimensional model obtained by the method of any one of claims 1 to 10, the three-dimensional model (30) comprising:
a three-dimensional body model (1) made of a body model material (24); and
a three-dimensional inner element model (2) embedded into the body model material (24);
**characterized in that**:
the inner element model (2) has at least one end (3) not covered by the body model material (24);
an electro-functional coating (45) is arranged on selected surfaces of the inner element model (2) and in contact with the body model material (24); and
at least one electrical conductor (5a, 5b, 46) is connected to the electro-functional coating (45), the at least one electrical conductor (5a, 5b, 46) having an accessible connection terminal.

12. The three-dimensional model according to claim 11, wherein the electro-functional coating (45) is a multi-layer electro-luminescent coating (4) comprising an electro-conductive first layer (41), a dielectric second layer (42), an electro-luminescent phosphor third layer (43), and a transparent electro-conductive fourth layer (44), and wherein the at least one electrical conductor (5a, 5b, 46) comprises an electrical conductor (5a) connected to the electro-conductive first layer (41) and another electrical conductor (5b) connected to the transparent electro-conductive fourth layer (44), the electrical conductors (5a, 5b) having respective accessible terminals.

13. The three-dimensional model according to claim 11, wherein the electro-functional coating (45) is a capacitive sensor coating comprising a sensor electro-conductive layer (27) and the at least one electrical conductor (5a, 5b, 46) comprises an electrical conductor (46) connected to the sensor electro-conductive layer (27).

14. The three-dimensional model according to claim 11, wherein the electro-functional coating (45) includes a multi-layer electro-luminescent coating (4), a transparent first encapsulating resin layer (26) arranged on the multi-layer electro-luminescent coating (4), a capacitive sensor coating, and a transparent second encapsulating layer (28) arranged on the capacitive sensor coating, the multi-layer electro-luminescent coating (4) comprising an electro-conductive first layer (41), a dielectric second layer (42), an electro-luminescent phosphor third layer (43), and a transparent electro-conductive fourth layer (44), the capacitive sensor coating comprising a sensor electro-conductive layer (27), and wherein the at least one electrical conductor (5a, 5b, 46) comprises an electrical conductor (5a) connected to the electro-conductive first layer (41), another electrical conductor (5b) connected to the transparent electro-conductive fourth layer (44), and still another electrical conductor (46) connected to the sensor electro-conductive layer (27).

15. The three-dimensional model according to claim 12 or 14, wherein the body model material (24) comprises a coloured, opaque, transparent or translucent silicone, rubber, hydrogel, composite, or resin curable by catalytic additives or by light radiation.
